# EUROPEAN PATENT APPLICATION

(11) **EP 4 616 757 A1**
(43) Date of publication of application: **17.09.2025**
(21) Application number: 24163451.8
(22) Date of filing: 14.03.2024
(51) Int. Cl.: A46B 15/00

(54) **OPERATING AN ORAL CARE DEVICE**

(71) Applicant: Koninklijke Philips N.V., 5656 AG Eindhoven (NL)
(72) Inventor: FRACKOWIAK, Bruno Jean François, Eindhoven (NL); VAN DEN DUNGEN, Wilhelmus Andreas Marinus Arnoldus Maria, Eindhoven (NL); KOOIJMAN, Gerben, Eindhoven (NL); PAULUSSEN, Elvira Johanna Maria, Eindhoven (NL); STOFFELS, Monique, Eindhoven (NL); WILLIAMS, Kayleigh Karina, Eindhoven (NL); ADRIAENSEN, Guido Antonius Theodorus, Eindhoven (NL); ZNAMENSKIY, Dmitry Nikolaevich, Eindhoven (NL)
(74) Representative: Philips Intellectual Property & Standards

(57) **Abstract**

Proposed are schemes, solutions, concepts, designs, methods and systems pertaining to controlling an oral care device comprising an integrated lighting arrangement. Specifically, an operational status value (e.g., position and motion data, oral care treatment element cycle monitoring data, and/or contact force data) indicative of real-time motion and position of the oral care device relative to the oral surface is obtained. The operational status value, along with the oral surface geometry of the user, is processed using a predictive model. The predictive model is adapted to map the operational status value and the oral surface geometry to physical behavior of the oral care device, and thus to a predicted position and deformation of the oral care device. From the predicted position and deformation, control parameters for the lighting arrangement may be determined, which are suitable for controlling the lighting arrangement to illuminate a target portion (e.g., the interdental space or the gum line) of the oral surface of the user. Accordingly, the lighting arrangement may be more effectively controlled for illumination of target areas of the oral surface.

## Description

### FIELD OF THE INVENTION

The present invention relates to operating an oral care device, and more particularly to operating an oral care device comprising an integrated lighting arrangement.

### BACKGROUND OF THE INVENTION

It is known that the use of light has several benefits for oral care. Light may be used to provide an anti-microbial effect, an anti-inflammatory effect, stain removal, and improved whitening. Furthermore, light treatment may be effective in targeting areas that are difficult to reach with mechanical brushing (e.g., a tooth pocket starting from the gumline, or interdental cavities). In order to effectively realise these benefits, light typically needs to be applied for a lengthy time period - often requiring tens of seconds to minutes to obtain the desired effect. It is therefore anticipated that a likely implementation of this kind of treatment will be in the form of a mouthpiece.

An oral healthcare device, such as a mouthpiece, which combines controlled mechanical movement (e.g., to affect brushing, reposition jets for fluid based cleaning, or reposition light emitters) with light treatment is challenging to effectively operate. Jaw and teeth shape varies substantially between users, whilst longitudinal motion of the controlled mechanical movement and lateral motion from the user means that it is difficult to determine a position of the oral care device. Of course, a further factor which compounds this issue is the possible deformation of the oral healthcare device during brushing.

Without knowledge of the position and deformation of the oral care device, the light treatment may be relatively uncontrolled. That is, it may not be possible to reliably target particular oral surfaces of the user with light. Proper targeting would increase efficacy of light treatment, and would ensure safety and comfort for the user of the oral care device. For example, proper targeting may reduce the induced temperature increase from illumination and from dissipated heat at the light source, and ensure minimal damage to healthy cells. Furthermore, proper targeting may limit the power consumption of the oral healthcare device, enabling the oral healthcare device to be powered by batteries for a satisfactory length of time.

One solution is to determine the position of the oral care device (in order to reliably control the light treatment) by performing optical sensing. However, optical sensing requires expensive sensors, and an accurate alignment of the device within the mouth. Such alignment is often difficult to achieve in practice with consumer devices. On top of that, optical sensing will be affected locally by the presence of toothpaste, bristles, and saliva in the field of view of the optical sensor, thus significantly reducing the accuracy of the detection.

There therefore exists a need for a means for controlling operation of an oral care device comprising an integrated lighting arrangement in a reliable and inexpensive manner.

### SUMMARY OF THE INVENTION

According to examples in accordance with an aspect of the invention, there is provided a method for operating an oral care device comprising an integrated lighting arrangement configured to illuminate an oral surface of a user while in use, wherein the method comprises:
obtaining an oral surface geometry describing the oral surface of the user;
   obtaining an operational status value of the oral care device indicative of real-time motion and position of the oral care device relative to the oral surface while in use;
processing the operational status value and the oral surface geometry, with a predictive model describing physical behavior of the oral care device, to predict a position and deformation of the oral care device;
determining one or more control parameters for controlling the lighting arrangement to illuminate a target portion of the oral surface of the user based on the predicted position and deformation of the oral care device.

Proposed is a method for controlling an oral care device comprising an integrated lighting arrangement. Specifically, an operational status value (e.g., position and motion data, oral care treatment element cycle monitoring data, and/or contact force data) indicative of real-time motion and position of the oral care device relative to the oral surface is obtained. The operational status value, along with the oral surface geometry of the user, is processed using a predictive model. The predictive model is adapted to map the operational status value and the oral surface geometry to physical behavior of the oral care device, and thus to a predicted position and deformation of the oral care device. From the predicted position and deformation, control parameters for the lighting arrangement may be determined, which are suitable for controlling the lighting arrangement to illuminate a target portion (e.g., an interdental space) of the oral surface of the user. Accordingly, the lighting arrangement may be more effectively controlled for illumination of target areas of the oral surface.

In other words, the invention relates to controlling a lighting arrangement (e.g., an intensity and directionality of light emitted from the lighting arrangement) of an oral care device such that the light is incident on a target area of the oral surface of the user. This is achieved by providing a predictive model configured to receive an operational status value and oral surface geometry as input, and to output a precited position and deformation of the oral care device. In particular, the predictive model enables the prediction of the lighting arrangement settings that would enable illumination of the target area based on a (time varying) operational status value of the oral care device (e.g., an oral care treatment element cycle monitoring value indicating a motion and position of the device). That is, the predictive model processes the operational status value while taking into account the oral care device and oral surface geometry.

Oral care device performance is modelled by the predictive model given the present operational status and the oral geometry. As the physical behavior/performance of the oral care device is predicted, the relative positioning and deformation of the oral care device with respect to the target area within the oral surface can be determined. From this prediction of location and deformation, optimal control parameters of the lighting arrangement can be determined.

As will be appreciated, a core aspect of the invention is the predictive model that describes physical behavior of the oral care device based on an operational status value and oral geometry. The interaction between the data input of the predictive model (i.e., the operational status value, and oral geometry), and the output (i.e., the position and deformation of the oral care device) is complex, especially when inexpensive sensors are used to obtain the operational status value. Nevertheless, the predictive model enables information from sensors describing the operational status (e.g., oral care element cycle and position/motion sensors) to be translated into control parameters for controlling the lighting arrangement to illuminate the target portion of the oral surface.

The invention enables a more robust and affordable means for controlling the oral care device in contrast to using optical sensing. That is, the operational status value may be obtained in a more robust and affordable manner than optical sensing data, which requires expensive sensors and may be obscured by toothpaste, saliva and bristles. For example, position and motion sensing, oral care treatment element cycle monitoring, and contact force sensing are cheaper and more reliable than optical sensing. However, the relationship between those inputs and the detection of the target area for light treatment is indirect and difficult to correlate. Accordingly, the invention proposes the use of a predictive model describing physical behavior of the oral care device to determine the position and deformation of the oral care device, from which optimal control parameters for the lighting arrangement may be determined. In some embodiments, the operational status value may comprise a driver parameter value describing real-time movement of an actuator configured to affect movement of an oral care treatment element of the oral care device for application to the oral surface of the user.

That is, the predictive model may take a driver parameter value as input (along with the oral geometry) and output a predicted position and deformation of the oral care device. Indeed, it has been realised that the actuator is the primary source of movement of the oral care device, and thus the primary factor in determining the position and deformation of the oral care device and in turn the optimal control parameters to ensure illumination of the target portion of the oral surface. Advantageously, the driver parameter value may be obtained from relatively cheap and robust sensors.

By way of explanation, the driver parameter value describes the real-time motion and position of the actuator, and thus the motion of the oral care treatment element. This movement results in a controlled movement of the oral care device, and accordingly the controlled movement of the light arrangement relative to the oral surface. Accordingly, it is possible to link the driver parameter value to the control parameters of the lighting arrangement that may effectively illuminate the target portion of the oral surface. The predictive model bridges this gap, and generates a predicted position and deformation of the oral care device responsive to the driver parameter value.

For example, the oral care treatment element may comprise one or more bristles for mechanical cleaning of the oral surface, one or more light emitters for light treatment of the oral surface, or one or more fluid sources for fluid cleaning of the oral surface. When these elements are moved by the actuator, the oral care device itself may be repositioned and deformed.

Processing the operational status value with the predictive model according to some embodiments may comprise determining a position and deformation of the oral care device relative to the oral surface of the user based on one or more physical characteristics of the oral care device, the oral surface geometry of the user, and the operational status value.

The position of the oral care device relative to the oral surface of the user may be inferred by the predictive model based one or more physical characteristics of the oral care device (e.g., a geometry of the oral care device), the oral surface geometry of the user, and the operational status value. Indeed, these three factors together are the largest determining factors as to the relative location of the oral care device. It is worth noting that, during use of the oral care device, the operational status value is time-varying, whilst the oral geometry and the physical characteristics of the oral care device are constant. Accordingly, the operational status value may be provided to a transfer function that takes into account the oral geometry and the physical characteristics of the oral care device, to output the time-varying position of the oral care device.

For instance, in the case that the operational status value describes the pump cycle of an actuator affecting movement of the oral care mouthpiece, the pump cycle would be processed by the predictive model taking into account the oral geometry and the physical characteristics of the oral care device in order to predict the time varying location of the oral care mouthpiece with respect to the oral surface of the user.

Furthermore, processing the operational status value with the predictive model may also comprise determining a deformation of the oral care device based on the determined position of the oral care device, one or more physical characteristics of the oral care device, the oral surface geometry of the user, and the operational status value.

The deformation (i.e., the bend, warp and distortion) of the oral care device may be inferred by the predictive model based the position of the oral are device (relative to the oral surface) one or more physical characteristics of the oral care device (e.g., a geometry of the oral care device, materials of the oral care device, etc.), the oral surface geometry of the user, and the operational status value. Indeed, these four factors together are the largest determining factors as to how the oral care device may be deformed.

In some embodiments, obtaining the oral surface geometry of the user may comprise determining the oral surface geometry of the user based on a plurality of different oral surface geometries of a population.

The oral surface shapes of individuals vary vastly. That is, different users have different sized jaws, teeth, interdental spaces, etc. Accordingly, embodiments of the invention may provide that the oral surface geometry is derived from population data.

There may be a need to determine the oral surface geometry that is most similar to the oral surface geometry of the user. For example, an oral surface geometry may be chosen from the plurality of oral surface geometries based on a best-fit scheme. Alternatively, an average of oral surface geometries of similar users (e.g., based on demographics and other user characteristics).

In any case, a more accurate oral surface geometry may result in a more accurate (i.e., closer to ground-truth) prediction from the predictive model.

The method may also comprise adjusting the oral surface geometry of the user based on a user input describing a variation in the geometry of the oral surface.

The user may thus provide an input as to their oral surface geometry. For example, they may provide measurements as to oral surface features. This may ultimately provide an oral surface geometry closer describing the shape of the oral surface of the user, and thus a more accurate prediction from the predictive model.

The method may additionally or alternatively comprise steps of obtaining an image of the user's head; and processing the image to determine the geometry of the oral surface of the user.

In other words, the oral surface geometry may be derived from an image of the user's head. The image of the user's head may provide information as to the size and shape of the oral surface geometry. For example, in the case that the image is an external image of the user's head, the image may provide information as to jaw shape and size. In another case when the image is an internal image of the user's head (i.e., of the user's mouth), the image may provide information as to tooth size, shape, presence and distribution.

Whilst deriving the oral surface geometry from an image of the user's head may be more complex, for example than obtaining a template oral geometry from a population or from a user input, the derived oral surface geometry may more closely reflect the shape of the user's oral surface. Accordingly, a prediction from the predictive model may be more accurate.

In this case, the oral care device may further comprise an imaging arrangement configured to generate a signal indicative of the geometry of the oral surface of the user. Then, the method may further comprise determining the geometry of the oral surface of the user based on the signal.

The image of the user's head may be captured from another device, or obtained from a database such as from medical records. Even so, an imaging arrangement may be provided to obtain the signal indicative of the geometry (e.g., an image or a dense contact sensor array signal). This may more reliably and consistently determine the oral surface geometry than based on an image captured from an external device, and may be more straightforward for the user.

In certain embodiments, when the oral care device further comprises a contact, motion, or pressure sensor arrangement configured to generate a localization signal indicative of a relative positioning between parts of the oral care device and parts of the oral surface while in use, the method may further comprise processing the localization signal to update the predictive model.

To be clear, this embodiment relates to the use of an array of contact, motion or pressure sensors, or a mixture thereof, which together provide a reference as to a relative positioning of the oral care device and the oral surface of the user. For example, there may be few contact sensors, each provided at different parts of the oral care device, which will indicate whether (and, perhaps, to what extent) the oral care device is in contact with the oral surface of the user at those parts of the oral care device. This result may be compared to the predicted position and deformation of the oral care device provided by the predictive model. As a result, it may be possible to verify or correct the predicted position. In other words, based on a comparison between the localization signal provided by the sensor arrangement, and an expected localization signal based on the predicted position and deformation, the predictive model may be (re)calibrated.

The one or more control parameters in exemplary embodiments may comprise at least one of steering parameter describing a target central emission angle of light from one or more light emitters of the lighting arrangement, a dispersal parameter describing a breadth of dispersion of light from the one or more light emitters, a light amplitude parameter describing an intensity of light from one or more light emitters, and a light property parameter describing a frequency of light from one or more light emitters.

These control parameters may enable the light to be directed toward the target area, once determined based on the predicted position and deformation of the oral care device, in an appropriate manner. Indeed, these range of control parameters may enable light from the lighting arrangement to be directed in a plurality of directions, with appropriate intensity, frequency, and dispersion.

Moreover, when the oral care device further comprises a light sensor arrangement configured to generate an illumination signal describing illumination of parts of the oral surface while in use, the method may further comprise processing the illumination signal, with the predictive model of the oral care device, to update the one or more control parameters.

That is, there may be provided a means for optical sensing of the oral surface by the oral care device. The light sensor arrangement may detect an illumination level at one or more parts of the oral surface relative to the oral care device. By comparing this to an expected illumination level, which may be derived from the control parameters of the lighting arrangement and predicted position and deformation, a deviation may be detected. When a deviation from the expected illumination is detected, the control parameters may be modified/adjusted/updated. In other words, if illumination at certain parts of the oral surface deviates from an expected illumination level, then the control parameters may be adjusted with the aim of meeting, or approaching, the expected illumination level.

Additionally, the method may further comprise processing the illumination signal to determine a relative positioning between parts of the oral care device and parts of the oral surface while in use, and processing the determined relative position to update/(re)calibrate the predictive model.

Similarly to embodiments having the contact, motion or pressure sensor arrangement, this embodiment compares the predicted position and deformation of the oral care device provided by the predictive model, to a ground-truth position of the oral care device provided by the illumination signal. As a result, it may be possible to verify or correct the predicted position. In other words, based on a comparison between the determined relative positioning from the illumination signal provided by the light sensor arrangement, and an expected localization signal based on the predicted position and deformation, the predictive model may be (re)calibrated.

In some embodiments, the method may further comprise generating a user feedback signal prompting the user to reposition the oral care device based on the predicted position and deformation of the oral care device.

The user feedback signal may be in the form of a sound, light, or haptic feedback. In other embodiments, the user feedback signal may provide text-based instructions to the user. By repositioning the oral care device, the treatment action of the oral care device may be improved. For example, if from the predicted position and deformation it is determined that a target portion of the oral surface cannot be washed with light, then the user may be prompted to reposition the device such that the lighting arrangement may illuminate the target portion.

In further embodiments, the user feedback signal may also be generated based on the localization signal from the contact, motion, or pressure sensor arrangement, and/or the illumination signal from the light sensor arrangement. For example, the user may be prompted to reposition the device such that the localization signal and/or illumination signal provide expected values during use. Accordingly, the treatment provided by the oral care device may be improved. Additionally, an accuracy of the predicted position and deformation from the predictive model may be improved by reducing uncertainty arising from incorrect positioning of the oral care device in the mouth by the user.

According to examples in accordance with another aspect of the invention, there is provided computer program comprising computer program code means adapted, when said computer program is run on a computer, to implement any method of operating an oral care device disclosed herein.

According to further examples in accordance with an additional aspect of the invention, there is provided an oral care device, comprising:
an integrated lighting arrangement configured to illuminate an oral surface of a user while in use; and
a processor configured to:
   obtain an oral surface geometry describing an oral surface of the user;
   obtain an operational status value of the oral care device indicative of real-time motion and position of the oral care device relative to the oral surface while in use;
   process the operational status value and the oral surface geometry, with a predictive model describing physical behavior of the oral care device, to predict a position and deformation of the oral care device;
   determine one or more control parameters for controlling the lighting arrangement to illuminate a target portion of the oral surface of the user based on the predicted position and deformation of the oral care device.

In some embodiments, the oral care device may further comprise an oral care treatment element for application to the oral surface while in use; and an actuator configured to affect movement of the oral care treatment element while in use. In this case, the operational status value may comprise a driver parameter value describing movement of the actuator affecting movement of the oral care treatment element.

Furthermore, the lighting arrangement may comprise one or more light emitters. In this case, the one or more control parameters may comprise at least a steering parameter describing a target central emission angle of light from one or more light emitters of the lighting arrangement. Accordingly, each light emitter may comprise a steering element configured to alter the output the central emission angle of light from the light emitter based on the steering parameter.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 presents an abstracted view of an oral care device according to an aspect of the invention;
Fig. 2 is a workflow of use of the predictive model according to an embodiment of the invention;
Fig. 3 is a flow diagram of a method for controlling an oral care device according to another embodiment of the invention;
Fig. 4 is a simplified block diagram of an oral care device according to a further embodiment of the invention; and
Fig. 5 provides a simplified block diagram of a computer within which one or more parts of an embodiment may be employed.

### DETAILED DESCRIPTION OF THE EMBODIMENTS

The invention will be described with reference to the Figures.

It should be understood that the Figures are merely schematic and are not drawn to scale. It should also be understood that the same reference numerals are used throughout the Figures to indicate the same or similar parts.

It should also be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. The mere fact that certain measures are recited in mutually different dependent claims does not indicate that a combination of these measures cannot be used to advantage.

Proposed are schemes, solutions, concepts, designs, methods and systems pertaining to controlling an oral care device comprising an integrated lighting arrangement. Specifically, an operational status value (e.g., position and motion data, oral care treatment element cycle monitoring data, and/or contact force data) indicative of real-time motion and position of the oral care device relative to the oral surface is obtained. The operational status value, along with the oral surface geometry of the user, is processed using a predictive model. The predictive model is adapted to map the operational status value and the oral surface geometry to physical behavior of the oral care device, and thus to a predicted position and deformation of the oral care device. From the predicted position and deformation, control parameters for the lighting arrangement may be determined, which are suitable for controlling the lighting arrangement to illuminate a target portion (e.g., the interdental space or the gum line) of the oral surface of the user. Accordingly, the lighting arrangement may be more effectively controlled for illumination of target areas of the oral surface.

Disclosed embodiments of the invention describe methods and systems embedded in an oral care device that has an actuator affecting controlled motion during use, and an integrated lighting arrangement. For example, the oral care device may have a controlled brushing motion. The disclosed invention provides a predictive model that enables detection and illumination of target portions/areas of the oral surface of the user (e.g. interdental space and gumline). That is, from an operational status value indicative of the real-time motion (e.g., the controlled motion) and position of the oral care device, control parameters for the lighting arrangement may be determined to illuminate the target portion. In some embodiments, the proposed method provides personalized light treatment during use of the oral care device and guidance for use of the oral care device. Furthermore, the invention may take into account the personal oral geometry of the user (i.e., accounting for the user jaw shape variability), and leverages the uncertainties related to lateral (e.g., uncontrolled/undriven) motion of the oral care device, the clearance between the oral care device and the user oral surface, and the biting force from the user. Moreover, the invention may circumvent the need for complex sensors for detecting the critical areas to illuminate in the mouth. That is, the invention may obviate the need for optical sensors for locating the target portion and thus controlling the lighting arrangement.

By way of explanation, an oral healthcare device (e.g. a mouthpiece) combining an actuator configured to affect movement of an oral care treatment element, and a lighting arrangement configured to illuminate an oral surface of a user, is very challenging to operate. Indeed, it is desirable to control the lighting arrangement to illuminate a particular target area, but the movement affected by the actuator may continually reposition the lighting arrangement relative to the oral surface of the user. This problem is compounded by several factors: (i) variability of oral surface geometry (e.g., jaw and teeth shapes) between users; (ii) longitudinal motion as a result of the movement of the oral care treatment element; (iii) clearance between the device and the oral surface accommodating lateral motion from the user; (iv) lateral motion and biting force from the user; (v) deformation of the oral care device during motion, particularly if made of soft material.

Existing solutions relate to the detection of the oral surface and thus the relative positioning of the lighting arrangement and oral surface by optical sensing, which requires expensive sensors and accurate alignment of the device within the mouth of the user. Such alignment is difficult to achieve in practice with consumer devices. On top of that, optical sensing may be impeded by the presence of toothpaste, bristles and saliva, thus significantly reducing the accuracy of the detection.

It has been realised that more robust, accurate and affordable sensing can be achieved by monitoring the operational status of the device. That is, values indicating (but not necessarily directly describing) real-time motion and position of the oral care device relative to the oral surface may be more reliable than optical sensing. Such values may include position and motion sensing value (e.g., accelerometer and gyroscope values), actuator cycle monitoring (e.g., the state of the actuator used to affect controlled movement of a part of the oral care device), and contact force sensing (e.g., contact sensors at predefined locations of the oral care device).

However, it is often not clear how the operational status value correlates to optimal control parameters for the lighting arrangement. That is, the relationship between the operational status value of the device, and detection of the location of the target potion of the oral surface of the user is indirect and difficult to correlate. Accordingly, the invention provides a predictive model that describes physical behaviour of the oral care device based on the operational status value and the oral geometry of the user. The predictive model thus receives the operational status value and the oral geometry, and outputs a predicted position and deformation of the oral care device. From the predicted position and deformation control parameters of the lighting arrangement that ensure illumination of the target portion of the oral surface may be determined.

Synchronization of the control parameters for the lighting arrangement with the controlled motion as indicated by the operational status value may be key to ensure that the light continually illuminates the target portion of the oral surface. Thus, the predictive model is run in real time, in that the operational status value is indicative the real-time motion and position of the oral care device. Accordingly, to achieve this real time processing, the predictive model may be a surrogate model with minimal physics (or a data driven model) working on an appropriate parameter space. It is thus a further objective of the present invention to offer a virtual environment to develop a more complex biophysical predictive model and to train the surrogate predictive model on the operational parameter space.

In further embodiments, calibration of the predictive model is achieved by obtaining feedback. For example, in some embodiments, illumination of the target portion is measured in order to determine whether and the extent to which the target portion is illuminated responsive to control of the lighting arrangement derived from the predictive model. Furthermore, a localization signal describing a relative positioning between parts of the oral care device and parts of the oral surface while in use may be generated by a sensor arrangement to compare the predicted position and deformation of the oral care device to ground truth position and deformation derivable from the localisation signal, Thus, accuracy and robustness of the predictive model may be improved by such calibration.

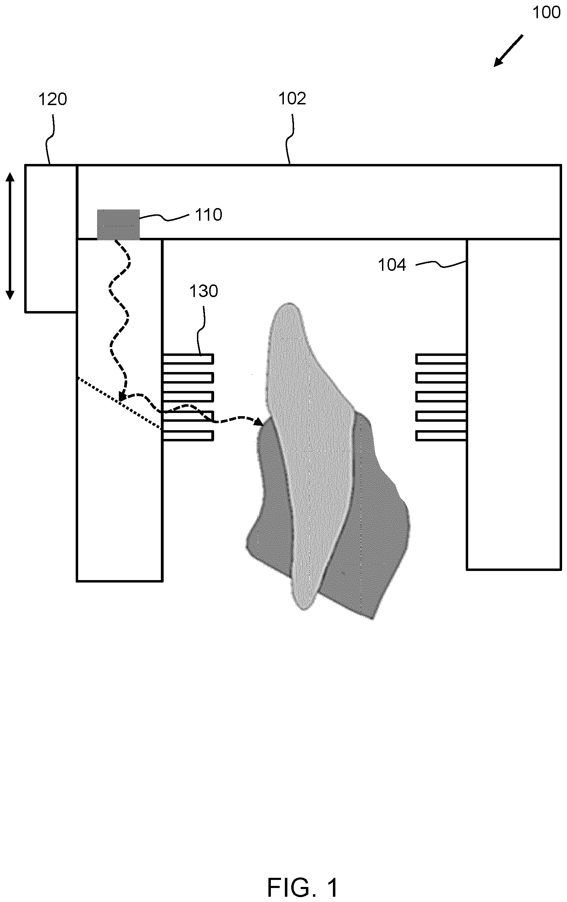

In order to facilitate understanding of the invention, an abstracted view of an oral care device 100 to which aspects of the invention may be implemented is presented in Fig. 1.

As presented, the oral care device 100 may be a mouthpiece or similar device that is held in the mouth of the user during a cleaning process. In the depicted example, the oral care device 100 comprises a mouthpiece arch 102 for positioning over the (at least one) tooth of the user, and mouthpiece fingers 104 for positioning on opposing sides of the tooth. This enables the mouthpiece to encompass the tooth. Of course, in typical embodiments the mouthpiece will encompass most or all of the teeth of the user, for example similarly to a gum guard. Of course, the invention is not restricted to mouthpieces implementations, and may be applied to any oral care device 100 having an actuator 120 affecting controlled movement of at least a part of the oral care device 100.

Furthermore, there is provided an oral care treatment element 130 for application to the oral surface (e.g., tooth and gum) while in use. For example, the oral care treatment element 130 may comprise one or more bristles for performing mechanical brushing of the oral surface, or jets for providing a fluid cleaning action. To this end, there is provided an actuator 120 configured to affect movement of the oral care treatment element 130, relative to the oral surface, while in use. As shown, the actuator 120 may move the oral care treatment element 130 in an up and down motion relative to the oral surface by moving the whole oral care device 100. In other examples, the actuator 120 may cause oscillation of the oral care treatment element 130, which may in turn cause movement of the oral care device 100. Of course, other oral care treatment elements 130 and actuators 120 may be employed, and would be readily apparent to the skilled person.

In addition, the oral care device 100 comprises an integrated lighting arrangement 110 configured to illuminate an oral surface of a user while in use. The integrated lighting arrangement 110 may be controlled according to one or more control parameters, which may be used to adjust a direction, intensity, dispersal, frequency of the light generated by the integrated lighting arrangement. Accordingly, the lighting arrangement 110 may emit light toward a target oral surface (such as the gum line or interdental spaces).

In one implementation there is provided a light source/emitter, and one or more light steering elements configured to steer light from the light source toward the oral surface at different angles and/or from different locations. In another implementation, there may be provided multiple light sources, each configured to directly illuminate the oral surface at different angles and/or from different locations. Alternatively, there may be provided a plurality of light sources, each comprising a steering element configured to alter the output the central emission angle of light from the light emitter. As shown, there may simply be provided a mirror whose orientation may be adjusted to redirect light toward the target oral surface.

By way of specific example the lighting arrangement 110 may facilitate steering of light towards specific target areas within the mouth of the user, with possible adaptation (spatial-temporal modulation) in real time. To meet this aim, the lighting arrangement 110 may comprise optical fibres, modulation of the material optical properties, embedded micro LED or mirrors, or other possible relevant technologies.

Accordingly, the oral care device 100 may illuminate the oral surface of the user, potentially providing an anti-microbial, anti-inflammatory, stain removal, and/or improved whitening effect. In addition, the controlled motion affected by the actuator 120 may provide a further treatment, such as a mechanical cleaning action.

However, as described above, the lighting arrangement 110 may not effectively provide these advantages if the target area is not illuminated with light for a satisfactory period of time. One approach would be to wash the oral surface with more light, but this would consume more power and lead to excessive heating. Another approach is to perform the cleaning process for a longer period of time, but this is inconvenient for the user and may also consume more power.

Ideally, the target area would remain illuminated whilst the oral care device 100 moves as a result of movement of the actuator. This requires the lighting arrangement 110 to be continually controlled to direct the light toward the target area as the oral care device 100 moves. However, it is difficult to directly determine the optimal control parameters of the lighting arrangement 110 to ensure this, as the time varying position and deformation of the oral care device 100 is complicated to measure.

Accordingly, there exists a need to provide control parameters to meet this aim from an operational status value of the oral care device 100 indicative of real-time motion and position of the oral care device. Specifically, it would be beneficial to determine control parameters from a driver parameter value describing movement of the actuator 120.

The disclosed embodiments propose solving this issue by providing a predictive model that can process the (time-varying) operational status value in the context of the oral surface geometry to predict a position and deformation of the oral care device 100. That is, the predictive model describes the physical behavior and performance of the oral care device 100 in the context of the oral surface geometry and the time varying operational status value. From the predicted position and deformation of the oral care device 100 control parameters that ensure that the lighting arrangement 110 illuminates the target portion of the oral surface may be determined.

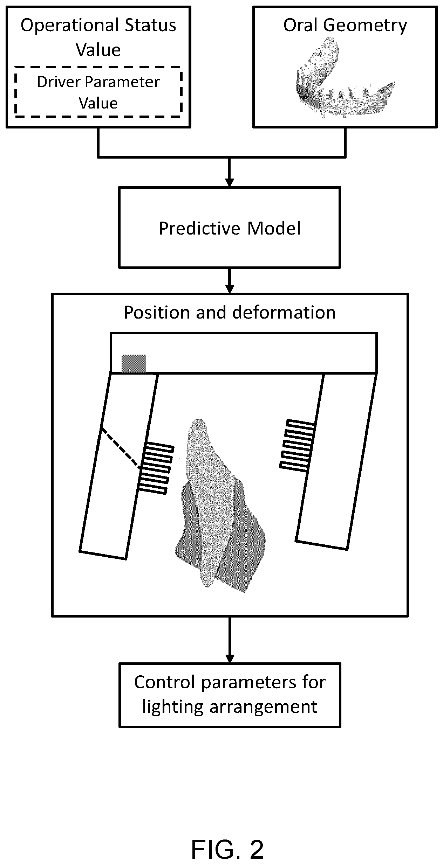

An example of the workflow of the predictive model is presented in Fig. 2. As shown, at a bare minimum an operational status value is provided to the predictive model (in real time), along with an oral geometry describing the (shape of) the oral surface of the user. The predictive model then predicts a position and deformation of the oral care device from the operational status value. From the predicted position and deformation, control parameters of the lighting arrangement may be determined that may deliver optimal illumination in the target portion of the oral surface.

The predictive model must run in real time to adapt the control parameters for the lighting arrangement so as to illuminate the same target area when the oral care device is moving (e.g., due to controlled movement of an actuator affecting movement of cleaning elements, such as during the brushing phase). The predictive model may thus be a physics-based simplified model, or a data driven model (e.g. using neural networks), trained from simulations performed with a more complex and realistic biophysical offline model. Overall, the predictive model predicts the expected physical behaviour of the oral care device during motion, in terms of relative location in the mouth, mechanical deformation and irradiance fields.

To be clear, the oral geometry of the user describes the (shape of the) oral surface of the user. That is, the oral geometry may describe the shape of the jaw, teeth and other oral surfaces of the user. The oral geometry may comprise a series of oral measurements describing the size of certain oral features of the particular user, for example.

Of course, oral geometry varies between different users. Therefore, provision of an oral geometry reflecting the (shape of the) oral service of the particular user may result in an improved prediction by the predictive model. In simple embodiments, the oral geometry may simply be selected from a database of oral geometries, based on, for example characteristics of the user. In some cases, the user may be prompted to input their oral geometry (e.g., selected from a list of options, or they may provide individual measurements). In alternative cases, the oral geometry may be derived from population data. For example, if the user is a large male, the oral geometry may be an average of oral geometries of large males in a population.

As stated above, with increasing accuracy of the oral geometry, the better the predictive model may perform (and in turn, the better the lighting arrangement may be controlled to illuminate the target portion of the oral surface). Therefore, in more complicated but more accurate implementations, the oral geometry of the user may be derived using images. The images may either be provided by the user, acquired from a dental professional, or acquired using embedded sensors of the oral care device.

Although not presented in Fig. 2, a feedback loop may be provided for calibration/adjustment of the predictive model during use. Specifically, additional embodiments may provide a contact, motion, and/or pressure sensor arrangement embedded in the oral care device to provide control points for localization of the oral care device with respect to the oral surface. These sensors are robust, affordable, and insensitive to the presence of toothpaste and saliva in the mouth. Hence, the predictive model may be recalibrated according to a difference between the predicted position and deformation of the oral care device and the ground truth position and deformation derivable from those sensors, thus improving the model output. Indeed, these differences may relate to uncertainties arising from lateral motion of the oral care device, the clearance between the oral care device and the oral surface, and the biting force from the user.

Alternatively, or in addition, embodiments may provide a light sensor arrangement configured to sense illumination of specific control points of the oral surface. Thus, the prediction of the predictive model may be verified, and the predictive model may be recalibrated according to this information, thus improving the model output. Furthermore, the signal from the light sensor arrangement may be used in real-time to re-adjust the control parameters of the lighting arrangement.

In other words, in a similar way as with the contact, pressure and/or motion sensor arrangements, the light sensor arrangement may to provide control points for localization of the oral care device with respect to the oral surface. Hence, the predictive model may be recalibrated according to a difference between the predicted position and deformation of the oral care device and the ground truth position and deformation derivable from a signal from the light sensor arrangement, assuming that the contamination in the mouth (e.g. from saliva or toothpaste) is partial.

In addition, the sensed illumination at specific parts of the oral surface may also indicate the presence of toothpaste between the oral care device and the target portion of the oral surface. Accordingly, a light intensity/dose may be adapted (by adapting the control parameters of the lighting arrangement) to ensure effective treatment by the light. Alternatively, it may be determined to turn off the lighting arrangement to prevent local heating from the absorbed light by the toothpaste, if it is determined that the concentration of toothpaste is too high.

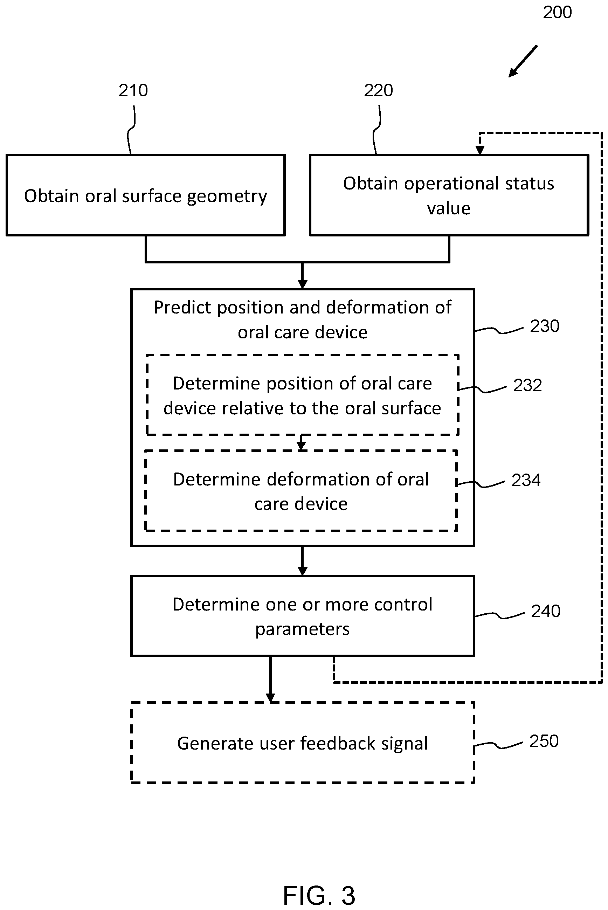

Turning to Fig. 3 there is presented a flow diagram of a method for controlling an oral care device according to an exemplary embodiment. The oral care device controlled by the method comprises an integrated lighting arrangement configured to illuminate an oral surface of a user while in use. The oral care device controlled by the method may also comprise an actuator configured to affect controlled movement of the oral care device.

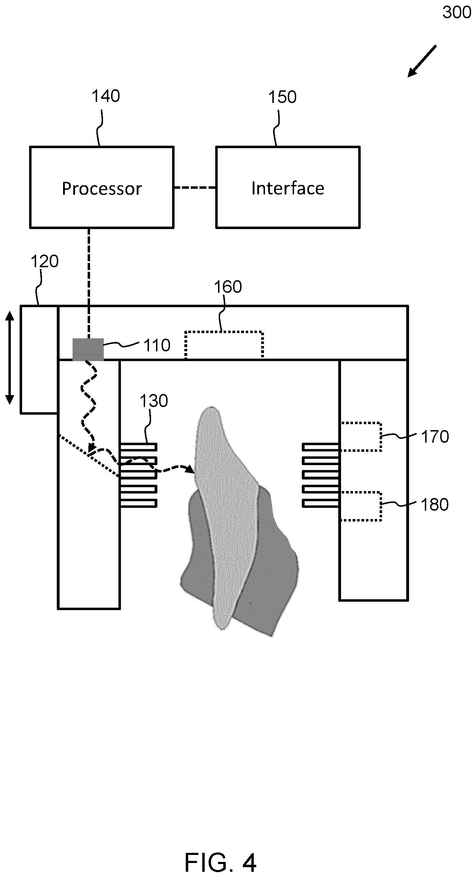

The integrated lighting arrangement and actuator will be discussed in more detail in reference to Fig. 4. However, it will be appreciated that the lighting arrangement is controllable based on one or more control parameters. This means that the light output by the lighting arrangement may be controlled according to the control parameters. This may be realised using any known means, such as an array of light sources, or one or more light sources with a light steering arrangement, etc. The actuator may be any means that cause the oral care device to move in a controlled manner, such as a means for affecting movement of one or more oral care treatment elements. For example, the actuator may drive motion of bristles for mechanical cleaning, jets for fluid cleaning, or light sources for light treatment. In some cases, the actuator may move the body of the oral care device itself, thereby causing relative motion between the oral care device and an oral surface of the user when in use.

In step 210, an oral surface geometry describing the oral surface of the user is obtained. To be clear, the oral surface geometry describes the shape of the oral surface of the user. To this end, the oral surface geometry may comprise one or more measurements of parts of the oral geometry, e.g., jaw size, tooth size, jaw shape, teeth shape, etc. In other embodiments, the oral surface geometry may be a reduced-order model, or even a full model (e.g., a topographical model) of the oral surface of the user. The oral surface geometry may be obtained from memory. That is, the oral surface geometry may have been previously-generated, and obtained from memory for use in the method. Alternatively, the oral surface geometry may be provided by a user input.

Ideally, the oral surface geometry accurately and thoroughly represents the oral surface of the specific user. However, this is not necessary for the invention, and a general oral surface geometry may be obtained, for example derived from oral geometries of a population. For example, the user may be associated with one of a selection of template oral geometries, each describing an oral surface of a user of a different size (e.g., a small oral geometry, a medium oral geometry of a large oral geometry).

Nevertheless, with increasing accuracy of the oral geometry to the actual oral surface of the user, the better the invention may perform. Indeed, such embodiments may be more complex, but may provide for better control of the oral care device.

In one embodiment, obtaining the oral surface geometry of the user comprises determining the oral surface geometry of the user based on a plurality of different oral surface geometries of a population. That is, the oral surface geometry may be selected from the plurality of different oral surface geometries, with the oral surface geometry most closely matching that of the user chosen. Alternatively, the oral surface geometry of the plurality of different oral surface geometries associated with an individual having the most characteristics in common with the user may be selected.

In another embodiment, the oral surface geometry may be generated/derived from an image of the user's head. In this case, the image of the user's head is obtained. This may be obtained from a database, or may be provided by a user, for example. The image is then processed (using known methods/techniques) to determine the geometry of the oral surface of the user. To clarify the image of the user's head may comprise an external picture of the user's head including a jaw line, or an internal image of the user's head, i.e., an image of the user as they open their mouth. In other cases, the image of the user's head may comprise a scan of the user's head (e.g., an x-ray) from which the oral geometry may be observed.

To acquire the image of the user's head, the oral care device may further comprise an imaging arrangement configured to generate a signal (i.e., an image) indicative of the geometry of the oral surface of the user. The signal may then be processed to determine the geometry of the oral surface of the user.

In yet further embodiments, the obtained oral surface geometry of the user may be adjusted based on a user input describing a variation in the geometry of the oral surface. In a basic embodiment, a template oral surface geometry may be provided, and may be adapted/modified based on the user input. For example, the user may indicate the absence of certain teeth, or may provide a measurement of a part of the oral surface, such as a general size, or a jawline length. In another embodiment, the oral surface geometry may be generated according to any embodiment described herein, and then adjusted based on user input. That is, the generated oral surface geometry may be presented to the user, and the user may edit the oral surface geometry based on their own knowledge.

The oral surface geometry may only be obtained once, such as in a setup procedure of the oral care device, and stored for later use. In other cases, the oral surface geometry may be occasionally updated, such as at regular intervals, or whenever the user begins using the oral care device. In most implementations, the oral surface geometry will only be obtained once during a use of the oral care device (i.e., the oral surface geometry will not vary with time whilst the oral care device is operated). This contrasts with the operational status value described below.

In step 220, an operational status value of the oral care device is obtained. The operational status value indicates real-time motion and position of the oral care device relative to the oral surface while in use. In other words, the operational status value is a proxy value for the motion and position of the oral care device relative to the oral surface of the user, from which the position of the oral care device may be derived. Of course, the operational status value varies in real time as the oral care device moves.

By way of example, the operational status value may be a value describing the state of an actuator configured to affect controlled movement of a part of the oral care device. Specifically, if the actuator is a bladder configured to affect up and down movement of the oral care device relative to the oral surface, the operational status value may describe the extent to which the bladder is inflated, and a rate of inflation or deflation of the bladder. Equally, if the actuator is a motor configured to move one or more oral care treatment elements relative to the oral surface, such as a drive for a brush head, the operational status value may describe the direction and intensity of the drive motion.

Alternatively, the operational status value may comprise values from sensors indicating the real-time motion and position of the oral care device. Such sensors may include accelerometers, gyroscopes or contact sensors that provide general measurements of the motion and position of at least part of the oral care device.

In specific embodiments, the operational status value comprises a driver parameter value describing real-time movement of an actuator configured to affect movement of at least part of the oral care device. More particularly, the actuator may affect movement of an oral care treatment element of the oral care device for application to the oral surface of the user.

In step 230, the position and deformation of the oral care device are predicted. This is achieved by processing the operational status value and the oral surface geometry with a predictive model describing the physical behavior of the oral care device.

The predictive model may receive the operational status value and oral surface geometry as inputs, model the physical behavior of the oral care device as a responsive to the operational status value and oral surface geometry, and outputs the predicted position and deformation.

In complex embodiments, the predictive model may be a complex biophysical model adapted to resolve mechanical equations and determine the time varying 3D shape of the oral care device, and time varying localization with respect to the oral geometry. This may provide a highly accurate prediction as to the deformation and position of the oral care device.

However, such a model may be computationally expensive to run. Accordingly, the predictive model may be a lower order model adapted to output a predicted deformation and position of the oral care device responsive to the operational status value and oral surface geometry that has been trained on, for example, a complex biophysical model. In any case, the predictive model may be physics-based (i.e., resolves mechanical equations to predict the position and deformation), or may be data driven (i.e., predicts the position and deformation based on previously seen positions and deformations associated with similar operational status values and oral surface geometries).

In particular, in optional sub-step 232, the processing the operational status value with the predictive model comprises determining a position of the oral care device relative to the oral surface of the user based on one or more physical characteristics of the oral care device, the oral surface geometry of the user, and the operational status value. Put another way, the predictive model takes into account one or more physical characteristics of the oral care device, the oral surface geometry of the user, and the operational status value when predicting the position of the oral care device.

Then, in optional sub-step 234, processing the operational status value with the predictive model comprises determining a deformation of the oral care device based on the determined position of the oral care device, one or more physical characteristics of the oral care device, the oral surface geometry of the user, and the operational status value. Put another way, the predictive model takes into account the predicted/determined position of the oral care device, one or more physical characteristics of the oral care device, the oral surface geometry of the user, and the operational status value when predicting the deformation of the oral care device.

In step 240, one or more control parameters are determined based on the predicted position and deformation of the oral care device. The one or more control parameters determined in this step are adapted to control the lighting arrangement to illuminate a target portion of the oral surface of the user.

The target portion of the oral surface of the user may correspond to one or more areas of the oral surface of the user to which light-based treatment is intended to be applied. For example, the target portion may be, at least part of, the gum line of the user, or the interdental spaces of the user.

The one or more control parameters may comprise one, or a combination of two or more of:
(i) a steering parameter describing an emission angle from the lighting arrangement.

In one example, the steering parameter describes a target central emission angle of light from one or more light emitters of the lighting arrangement. The steering parameter may prescribe the target central emission angle from each of the one or more light emitters individually. For example, the steering parameter may prescribe that the light emitter one has a target emission angle of 30 degrees, a second light emitter has a target central emission angle of 45 degrees.

Alternatively, in the case that the lighting arrangement comprises a light redirectors (e.g., a mirror), the steering parameter may refer to a position or state of the redirector that determines the redirection of the light incident to the redirector. For example, the steering parameter may describe an inclination angle of a mirror that may be adjusted to redirect light toward a specific target oral surface. Indeed, the mirror may be switched on (in reflection state), or switched off (in transmissive state) by steering, like an electrochromic mirror.
(ii) a dispersal parameter describing a breadth of dispersion of light from the one or more light emitters. Similarly to the steering parameter, the dispersal parameter may prescribe a dispersion breadth for each light emitter individually. Light emitters predicted to be close to the target portion may have a larger dispersion breadth (to wash the whole target portion), whilst light emitters predicted to be distal from the target portion may have a narrow dispersion breadth (to attempt to only illuminate the target portion);
(iii) a light amplitude parameter describing an intensity of light from one or more light emitters. Some of the light emitters may have a high intensity if near the target portion, whilst those that cannot illuminate the target portion may be turned off. Furthermore, if a light emitter can only illuminate a part of the target (i.e., the target oral surface is partially obscured by another oral surface, for example), then the light amplitude parameter may adjust the intensity of light from the respective light emitter to a safe level, or may turn the respective light emitter off; and
(iv) a light property parameter describing a wavelength of light from one or more light emitters, a pulse frequency of light from one or more light emitters, and/or a pulse width of light from one or more light emitters. For example, different light emitters may serve different purposes, in that one may provide a sanitizing function, whilst another may provide a whitening function, and this purpose may depend on a proximity of the respective light emitter to a certain target portion of the oral surface.

Of course, these control parameters are not intended to be exhaustive, and other control parameters would be readily apparent to the skilled person that may be used to control the lighting arrangement. Indeed, any parameter that may be used to selectively illuminate certain portions of the oral surface may be employed.

The one or more control parameters are determined by considering the predicted position and deformation of the oral care device. Indeed, if the position and deformation of the oral care device is known, then the position and orientation of the lighting arrangement relative to the oral surface may be known, since the lighting arrangement position and orientation with the oral care device is known from design. Accordingly, it is possible to determine/identify a way in which the lighting arrangement should be controlled to illuminate the target portion.

Once the control parameters are determined, they may be used to control the lighting arrangement. The method may then continue to step 220, in which an updated operational status value may be obtained, and steps 230 and 240 completed again. Accordingly, the determined control parameters may be continually updated in order to ensure that the lighting arrangement continues to illuminate the target portion.

In optional step 250, a user feedback signal prompting the user to reposition the oral care device based on the predicted position and deformation of the oral care device. If the predicted position and deformation meet certain values, then the user may be prompted to reposition the oral care device.

For instance, when the predicted position and deformation indicates that a target portion cannot be illuminated, the oral care device may need to be repositioned. Equally, when the predicted deformation indicates a high degree of deformation (which may be damaging for the device), or the predicted position indicates a position that may hurt the user or damage the device, the user may be prompted to reposition the oral care device.

The user feedback signal may be provided in the form of a sound, light, or haptic feedback signal which may prompt the user to reposition the device until the device is in an adequate position. Alternatively, the user feedback signal may be provided in a form that enables the user to be given a list of instructions regarding how to reposition the device.

Although not shown, the method in Fig. 3 may further comprise steps for verifying (and potentially correcting) the output of the predictive model, and for verifying (and potentially correcting) the determined one or more control parameters.

In some cases, a localization signal describing a relative positioning between parts of the oral care device, and parts of the oral surface may be acquired. That is, the localization signal may be a measurement of the distance between parts of the oral care device and parts of the oral surface. If it is determined that there is a difference between the localization signal, and the localization signal that may be expected based on the predicted position and deformation of the oral care device, then this may indicate that the prediction provided by the predictive model is incorrect.

Thus, a localization signal may be obtained. Then, the localization signal may be processed in order to update (i.e., calibrate) the predictive model. For example, certain parameters of the predictive model may be altered based on the processed localization signal to ensure a predicted position and deformation output that agrees with the localization signal.

The localization signal may be obtained from a contact sensor arrangement, a motion sensor arrangement, or pressure sensor arrangement, or a combination thereof, integrated with the oral care device. These sensors may provide local measurements as to the distance between the sensor and the oral surface. As long as the sensor location on the oral care device is known, the distance between that location of the oral care device and the oral surface may be determined.

Alternatively, or additionally, the localization signal may be obtained from a light sensor arrangement configured to optically determine the relative positioning of, or the distance between, parts of the oral care device and the oral surface.

An additional benefit of the light sensor arrangement may be to verify the illumination of parts of the oral surface of the user. Based on the determined control parameters, certain parts of the oral surface may be expected to be illuminated to a certain level. Thus, if illumination of these parts of the oral surface differs from the expected illumination, the one or more control parameters may be modified/adapted/updated, to ensure that the expected illumination occurs. Accordingly, the target portion of the oral surface may be more likely to be correctly illuminated.

Referring back to step 250, it should also be noted that the user feedback signal may be further based on a localization signal. For example, if during use the localization signal indicates that the relative positioning of the oral care device and the oral surface is incorrect, the user may be prompted to repositioned until the localization signal meets an expected state.

Fig. 4 presents a simplified block diagram of an oral care device 300 according to an embodiment of the invention. The oral care device 300 may be a toothbrush, a mouthpiece, or any other device that performs a treatment function on an oral surface of the user. The treatment function may be a cleaning, sanitization, whitening, or anti-inflammatory function, for example. The oral care device 300 may be a personal care device suitable for user by individual consumers. The oral care device 300 may be a portable handheld device.

The oral care device 300 comprises an integrated lighting arrangement 110 configured to illuminate an oral surface of a user while the oral care device is in use. The lighting arrangement 110 is thus adapted to illuminate the oral surface while the oral care device 300 is provided in a position for providing an associated treatment function.

The lighting arrangement 110 may be configured to illuminate the oral surface with a light that may provide an anti-microbial effect, an anti-inflammatory effect, a stain removal effect, or a whitening effect. The intensity and a frequency of the light produced by the lighting arrangement 110 will thus be chosen accordingly, as would be well understood by the skilled person.

The depicted lighting arrangement 110 comprises a single light emitter (i.e., light sources), but it will be appreciated that the lighting arrangement 110 may comprise a plurality of light emitters. The light emitter may directly illuminate the oral surface of the user. However, in the depicted example, the light emitter comprises a steering element configured to alter the output the central emission angle of light from the light emitter. That is, the steering element adapts a light path of light emitted from the light emitter in order to illuminate the oral surface. More specifically, Fig. 4 illustrates this principle with a mirror that directs the light from the light emitter toward the target area. The angle of the mirror may be adjusted in order to redirect the light toward the target area. Alternatively, there may be provided a plurality of scattering layers containing electrochromic materials, whose optical properties can be modulated in real time in order to redirect the light. Thus, the light can be steered at different heights with respect to the gumline position.

Of course, other light steering techniques can be considered as well, e.g., optical fibers, embedded micro LED or mirrors. Hence, if the position and deformation of the oral care device 300 is known, the scattering properties of the steering element can be modified to steer the light towards a target area.

The lighting arrangement 110 is controllable by the processor 140, which provides one or more control parameters. This means that the light output by the lighting arrangement 110 may be modified according to the control parameters, such that selected areas of the oral surface of the user may be illuminated. In some embodiments, the control parameters may be used to directly control the light emitter. In other embodiments, the control parameters may be used to control the steering element of the light emitter.

Furthermore, the depicted oral care device 300 also comprises an actuator 120 configured to affect controlled movement of at least a part of the oral care device 300. In some embodiments, the actuator 120 may drive movement of an oral care treatment element 130 for application to the oral surface while in use. In other embodiments, the actuator 120 may drive movement of the oral care device 300 itself (i.e., the body of the oral care device 300).

For example, the actuator 120 may drive movement of bristles for mechanical cleaning, jets for fluid cleaning, or light sources for light treatment. It should also be noted that when the actuator 120 drives movement of the body of the oral care device, this may also in turn drive movement of the oral care treatment element 130 relative to the oral surface.

In addition, the oral care device 300 comprises a processor 140. The processor 140 may be provided as an integrated part of the oral care device 300. However, embodiments are not limited hereto. In other embodiments, parts of the function of the processor 300 may be performed by an external component. For example, at least some parts of the processor's 140 function may be performed by a mobile device, such as a smartphone, or on the cloud.

The processor 140 is configured to perform any of the steps of the method 200 described in reference to Fig. 3. More specifically, the processor 140 is configured to determine one or more control parameters for controlling the lighting arrangement 110 to illuminate a target portion of the oral surface of the user. The processor 140 achieves this by predicting a position and deformation of the oral care device 300. From the predicted position and deformation, appropriate control parameters for controlling the lighting arrangement 110 to illuminate the target portion may be selected.

In particular, the processor 140 obtains an oral surface geometry describing an oral surface of the user. That is, the oral surface geometry may simply be retrieved from memory. Nevertheless, it may be the case that the oral surface geometry is selected from (or based on) a population of oral geometries, may be provided by (or augmented by) a user, generated based on characteristic information of the user, generated based on an image of the user, or a combination thereof.

In the depicted embodiment, there is provided an imaging arrangement 160 configured to generate a signal indicative of the geometry of the oral surface of the user. That is, the imaging arrangement 160 generates an image of the oral surface of the user. The imaging arrangement 160 and/or the processor 140 may then process the signal/image (using known image processing techniques) to determine the geometry of the oral surface of the user.

The processor 140 is also configured to obtain an operational status value of the oral care device 300 indicative of real-time motion and position of the oral care device 300 relative to the oral surface while in use.

This may be obtained from, or based on measurements taken from, the actuator 120 discussed above. That is, the operational status value may comprise a driver parameter value describing real-time motion and position of the actuator 120 affecting movement of at least part of the oral care device. Indeed, the operational status value may comprise a drive parameter value describing real-time motion and position of the oral care treatment element 130.

To predict the position and deformation of the oral care device 300, the processor 140 is configured to process the operational status value and the oral surface geometry with a predictive model describing physical behavior of the oral care device 300. In other words, the processor 140 provides the operational status value and the oral surface geometry to the predictive model, and receives a predicted position and deformation of the oral care device 300.

As also depicted, the oral care device may further comprise a sensor arrangement 170 comprising contact, motion, and/or pressure sensors. Although depicted as a single element, the sensor arrangement 170 may be distributed across parts of the oral acre device 130. The sensor arrangement 170 may thus generate a localization signal indicative of a relative positioning between parts of the oral care device 300 and parts of the oral surface while in use. For example, the sensor arrangement 170 may indicate where the oral surface is in contact with the oral care device 300.

This localization signal may be obtained by the processor 140, and used to verify the predicted position and deformation of the oral care device 300. Accordingly, the predictive model may be updated/calibrated by the processor 140 responsive to identifying a discrepancy between the predicted position and deformation, and the position and deformation derived from the localization signal.

Furthermore, the oral care device 300 may also comprise a light sensor arrangement 180 configured to generate an illumination signal describing illumination of parts of the oral surface while in use. Although depicted as a single element, the light sensor arrangement 180 may be distributed across parts of the oral acre device 130. The processor 140 may thus receive the illumination signal and compare the illumination signal to an expected illumination of the oral surface (based on the control parameters provided by the processor to the lighting arrangement 110). If a discrepancy is detected, then the one or more control parameters may be updated/adapted, and/or the predictive model may be updated/calibrated.

Accordingly, the contact, motion, and/or pressure sensor arrangement 170 and light sensor arrangement 180 may be used to provide feedback to verify an output of the predictive model, and to update the predictive model (if necessary). It will also be appreciated that the contact, motion, and/or pressure sensor arrangement 170 and light sensor arrangement 180 may be used to provide an initial calibration of the predictive model, so that the predictive model provides the predicted position and deformation taking into account an initial position and deformation of the oral care device 300 (derived from the sensor signals once the user has placed the oral care device in an operating position).

The oral care device 300 may also comprise an interface 150. Similarly to the processor 140, the interface 150 may be integrated as part of the oral care device, or provided as part of an external device (such as a smartphone). The interface 150 is configured to provide user feedback to a user that prompts repositioning of the oral care device 300 so as to improve operation of the oral care device.

That is, the interface 150 may receive a user feedback signal from the processor 140 prompting the user to reposition the oral care device. The processor 140 may generate the user feedback signal based on the predicted position and deformation of the oral care device 300, and/or the position and deformation derived from the illumination and/or localization signal described above. The interface 150 is then configured to output the user feedback signal, so as to prompt the user to take action.

Overall, the oral care device 300 is operated in such a way as to control the integrated lighting arrangement 110 in order to effectively and efficiently illuminate a target portion of the oral surface. This saves energy and cost over, whilst being safer to operate than, a brute force approach of illuminating large parts of the oral surface. In addition, the suggested approach of predicting the position and deformation using a predictive model adapted to correlate position and location based on operational status values, may be more robust and cheaper to implement than an optical sensing based system.

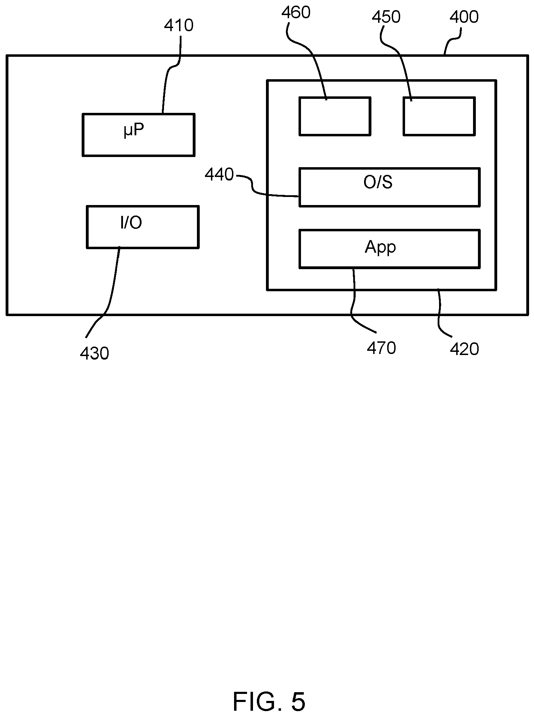

Fig. 5 illustrates an example of a computer 400 within which one or more parts of an embodiment may be employed. Various operations discussed above may utilize the capabilities of the computer 400. For example, one or more parts of a system for operating an oral care device may be incorporated in any element, module, application, and/or component discussed herein. In this regard, it is to be understood that system functional blocks can run on a single computer or may be distributed over several computers and locations (e.g. connected via internet), such as a cloud-based computing infrastructure.

The computer 400 includes, but is not limited to, PCs, workstations, laptops, PDAs, palm devices, servers, storages, microcontroller units, integrated processors, AI-accelerators, and the like. Generally, in terms of hardware architecture, the computer 400 may include one or more processors 410, memory 420, and one or more I/O devices 430 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 410 is a hardware device for executing software that can be stored in the memory 420. The processor 410 can be virtually any custom made or commercially available processor, a central processing unit (CPU), a digital signal processor (DSP), a tensor processing unit (TSP) specifically designed for neural processing, a dedicated AI accelerator/processing unit or an auxiliary processor among several processors associated with the computer 400, and the processor 410 may be a semiconductor based microprocessor (in the form of a microchip) or a microprocessor.

The memory 420 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 420 may incorporate electronic, magnetic, optical, and/or other types of storage media. Note that the memory 420 can have a distributed architecture, where various components are situated remote from one another, but can be accessed by the processor 410.

The software in the memory 420 may include one or more separate programs, each of which comprises an ordered listing of executable instructions for implementing logical functions. The software in the memory 420 includes a suitable operating system (O/S) 440, compiler 460, source code 450, and one or more applications 470 in accordance with exemplary embodiments. As illustrated, the application 470 comprises numerous functional components for implementing the features and operations of the exemplary embodiments. The application 470 of the computer 400 may represent various applications, computational units, logic, functional units, processes, operations, virtual entities, and/or modules in accordance with exemplary embodiments, but the application 470 is not meant to be a limitation.

The operating system 440 controls the execution of other computer programs, and provides scheduling, input-output control, file and data management, memory management, and communication control and related services. It is contemplated by the inventors that the application 470 for implementing exemplary embodiments may be applicable on all commercially available operating systems.

Application 470 may be a source program, executable program (object code), script, or any other entity comprising a set of instructions to be performed. When a source program, then the program is usually translated via a compiler (such as the compiler 460), assembler, interpreter, or the like, which may or may not be included within the memory 420, so as to operate properly in connection with the O/S 440. Furthermore, the application 470 can be written as an object oriented programming language, which has classes of data and methods, or a procedure programming language, which has routines, subroutines, and/or functions, for example but not limited to, C, C++, C#, Pascal, BASIC, API calls, HTML, XHTML, XML, ASP scripts, JavaScript, FORTRAN, COBOL, Perl, Java, ADA, NET, and the like.

The I/O devices 430 may include input devices such as, for example but not limited to, a mouse, keyboard, scanner, microphone, camera, etc. Furthermore, the I/O devices 430 may also include output devices, for example but not limited to a printer, display, etc. Finally, the I/O devices 430 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 430 also include components for communicating over various networks, such as the Internet or intranet.

If the computer 400 is a PC, workstation, intelligent device or the like, the software in the memory 420 may further include a basic input output system (BIOS) (omitted for simplicity). The BIOS is a set of essential software routines that initialize and test hardware at startup, start the O/S 440, and support the transfer of data among the hardware devices. The BIOS is stored in some type of read-only-memory, such as ROM, PROM, EPROM, EEPROM or the like, so that the BIOS can be executed when the computer 400 is activated.

When the computer 400 is in operation, the processor 410 is configured to execute software stored within the memory 420, to communicate data to and from the memory 420, and to generally control operations of the computer 400 pursuant to the software. The application 470 and the O/S 440 are read, in whole or in part, by the processor 410, perhaps buffered within the processor 410, and then executed.

When the application 470 is implemented in software it should be noted that the application 470 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 470 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The proposed control method(s) of Fig. 3, and parts of the system of Fig. 4, may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out a control method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, some of the blocks shown in the block diagrams of Fig 4. may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. A method for operating an oral care device comprising an integrated lighting arrangement configured to illuminate an oral surface of a user while in use, wherein the method comprises:
obtaining (210) an oral surface geometry describing the oral surface of the user; obtaining (220) an operational status value of the oral care device indicative of real-time motion and position of the oral care device relative to the oral surface while in use;
processing the operational status value and the oral surface geometry, with a predictive model describing physical behavior of the oral care device, to predict (230) a position and deformation of the oral care device;
determining (240) one or more control parameters for controlling the lighting arrangement to illuminate a target portion of the oral surface of the user based on the predicted position and deformation of the oral care device.

2. The method of claim 1, wherein the operational status value comprises a driver parameter value describing real-time movement of an actuator configured to affect movement of an oral care treatment element of the oral care device for application to the oral surface of the user.

3. The method of claim 1 or 2, wherein processing the operational status value with the predictive model comprises determining (232) a position of the oral care device relative to the oral surface of the user based on one or more physical characteristics of the oral care device, the oral surface geometry of the user, and the operational status value.

4. The method of claim 3, wherein processing the operational status value with the predictive model comprises determining (234) a deformation of the oral care device based on the determined position of the oral care device, one or more physical characteristics of the oral care device, the oral surface geometry of the user, and the operational status value.

5. The method of any of claims 1-4, wherein obtaining (210) the oral surface geometry of the user comprises determining the oral surface geometry of the user based on a plurality of different oral surface geometries of a population, and optionally further comprising:
adjusting the oral surface geometry of the user based on a user input describing a variation in the geometry of the oral surface.

6. The method of any of claims 1-5, further comprising:
obtaining an image of the user's head;
processing the image to determine the geometry of the oral surface of the user, and
optionally wherein the oral care device further comprises an imaging arrangement configured to generate a signal indicative of the geometry of the oral surface of the user, and wherein the method further comprises:
determining the geometry of the oral surface of the user based on the signal.

7. The method of any of claims 1-6, wherein the oral care device further comprises a contact, motion, or pressure sensor arrangement configured to generate a localization signal indicative of a relative positioning between parts of the oral care device and parts of the oral surface while in use, and the method further comprises:
processing the localization signal to update the predictive model.

8. The method of any of claims 1-7, wherein the one or more control parameters comprise at least one of steering parameter describing a target central emission angle of light from one or more light emitters of the lighting arrangement, a dispersal parameter describing a breadth of dispersion of light from the one or more light emitters, a light amplitude parameter describing an intensity of light from one or more light emitters, and a light property parameter describing a frequency of light from one or more light emitters.

9. The method of any of claims 1-8, wherein the oral care device further comprises a light sensor arrangement configured to generate an illumination signal describing illumination of parts of the oral surface while in use, and the method further comprises:
processing the illumination signal, with the predictive model of the oral care device, to update the one or more control parameters.

10. The method of claim 9, wherein the method further comprises:
processing the illumination signal to determine a relative positioning between parts of the oral care device and parts of the oral surface while in use, and
processing the determined relative position to update the predictive model.

11. The method of any of claims 1-10, further comprising generating (250) a user feedback signal prompting the user to reposition the oral care device based on the predicted position and deformation of the oral care device, and optionally on the predicted illumination at the target area.

12. A computer program comprising computer program code means adapted, when said computer program is run on a computer, to implement the method of any of claims 1-11.

13. An oral care device (300), comprising:
an integrated lighting arrangement (110) configured to illuminate an oral surface of a user while in use; and
a processor (140) configured to:
obtain an oral surface geometry describing an oral surface of the user;
obtain an operational status value of the oral care device indicative of real-time motion and position of the oral care device relative to the oral surface while in use;
process the operational status value and the oral surface geometry, with a predictive model describing physical behavior of the oral care device, to predict a position and deformation of the oral care device;
determine one or more control parameters for controlling the lighting arrangement to illuminate a target portion of the oral surface of the user based on the predicted position and deformation of the oral care device.

14. The oral care device of claim 13, further comprising:
an oral care treatment element (130) for application to the oral surface while in use; and
an actuator (120) configured to affect movement of the oral care treatment element while in use, and
wherein the operational status value comprises a driver parameter value describing movement of the actuator affecting movement of the oral care treatment element.

15. The oral care device of claim 13 or 14, wherein the lighting arrangement (110) comprises one or more light emitters, and the one or more control parameters comprises at least a steering parameter describing a target central emission angle of light from one or more light emitters of the lighting arrangement, and
wherein each light emitter comprises a steering element configured to alter the output the central emission angle of light from the light emitter based on the steering parameter.
